# EUROPEAN PATENT SPECIFICATION

(11) **EP 1 499 170 B1**
(45) Date of publication and mention of the grant of the patent: **01.03.2006**
(21) Application number: 03016060.0
(22) Date of filing: 15.07.2003
(51) Int. Cl.: H05K 7/02, G02F 1/13

(54) **Component carrier**
Bauteilträger
Support de composant

(43) Date of publication of application: 19.01.2005
(73) Proprietor: SIEMENS AKTIENGESELLSCHAFT, 80333 München (DE)
(72) Inventor: Kirner, Herbert, 78052 Villingen-Schwenningen (DE); Wahler, Torsten, 78073 Bad Dürrheim (DE)

(56) References cited:
- EP-A- 0 911 675
- DE-A- 3 408 176
- US-A- 4 357 061
- US-A- 4 619 431
- US-A- 5 568 357
- US-A- 6 108 213
- PATENT ABSTRACTS OF JAPAN vol. 1997, no. 03, 31 March 1997 (1997-03-31) -& JP 08 313880 A (ROHM CO LTD), 29 November 1996 (1996-11-29)

## Description

The present invention relates to the general field of carrier components and more particularly to an improved carrier for components, the components including displays and the like, as set out in claim 1 and to a method for making such carriers as set out in claim 9. Component carriers generally comprise a frame surrounded by a sealing lip (see e.g. documents JP-A-08313880 and DE-A-3408176). The combination of the frame and lip form a frame in which a component may be housed. The components generally include displays and other such sensitive electronic devices. The devices generally define a front and rear direction depending upon application of the component. For example, a display defines a front direction which projects forward to an intended viewer displayed information. The rear of a display is generally characterized by electronic components in need of protection against mechanical stresses as well as environmental effects. The aforementioned stresses and effects adversely impact and therefore limit utility of the life of the component. The stresses and effects generally arise out of implementation and environment of use. Continuing with the display example, a common application for displays is in automobiles and other moving vehicles. Such vehicles exist in a rugged world subject to external impacts being both mechanical force, as due to typical application of the vehicle, and environmental effects depending upon the vehicle operating environment. An additional source of stress and effect arise during assembly, both of the component to carrier and carrier into a larger (e.g. vehicular) housing. The stress and effect typify the problems facing use of components in intended, sometimes harsh, working environments. Accordingly, a solution or need exists for a component carrier that offers tolerance against stress and effect.

Current solutions to the above problem include applying two separates seals to a metal frame. Such seals generally are made of foam and comprise loose-bending pieces. Use of such seals include several problems. Application of the seals requires supporting tools of high position precision along with a visual inspection capability. Such tools are required given the variety of metal frames in application to which the seals are to be applied. In addition, given the foam composition, the seals tend to be not so deformable, thereby not providing a high degree of mechanical force absorption or protection. In addition, such seals include a high cycle time which reduces functional expediency of both carrier and component. Accordingly, a need or solution exists for a component carrier with improved resistance to mechanical and environmental stresses as well as improved manufacturing.

A solution to the above problems is set out by the present invention. The present invention is directed to a component.carrier which includes a combination of a frame and a single sealing lip. The frame may be made of metal and include walls defining an interior cavity. The sealing lip may be made of thermoplastic elastomer formed in a double sided sealing lip.

An object and advantage of the present invention is therefore to provide the above component carrier combination in a cost efficient and effective manner. This and other objects and advantages are achieved by the sealing lip being dovetailed with a first arm longer than a second arm. The first arm may face front, a direction defined by application of the component. The sealing lip may further be applied by a spraying process or an injection molding process, the both of which are well known in the art, less expensive than other processes and not requiring sophisticated equipment. Further, the present carrier component may include recesses or openings along a surface of the walls defined the interior cavity. The openings may be an open V shape facing into the cavity. The recesses provide for a griping point for the elastomer to adhere to during the cooling process. Accordingly, the sealing lip can maintain its form.

These and further aspects and advantages of the invention will be discussed more in detail hereinafter with reference to the disclosure of preferred embodiments, and in particular with reference to the appended Figures that show:
- Figure 1: depicts a first view of a first frame according to an embodiment of the present invention;
- Figure 2: depicts a second view of the first frame;
- Figure 3: depicts a sealing lip without a frame;
- Figure 4: depicts a sealing lip and frame combination;
- Figure 5: depicts a second view of a sealing lip and first frame combination;
- Figure 6: depicts a third view of a sealing lip and first frame combination;
- Figure 7: depicts a first view of a second frame;
- Figure 8: depicts a second view of the second frame;
- Figure 9: depicts a first view of a combination of the sealing lip and second frame; and
- Figure 10: depicts a second view of the combination of the sealing lip and second frame.

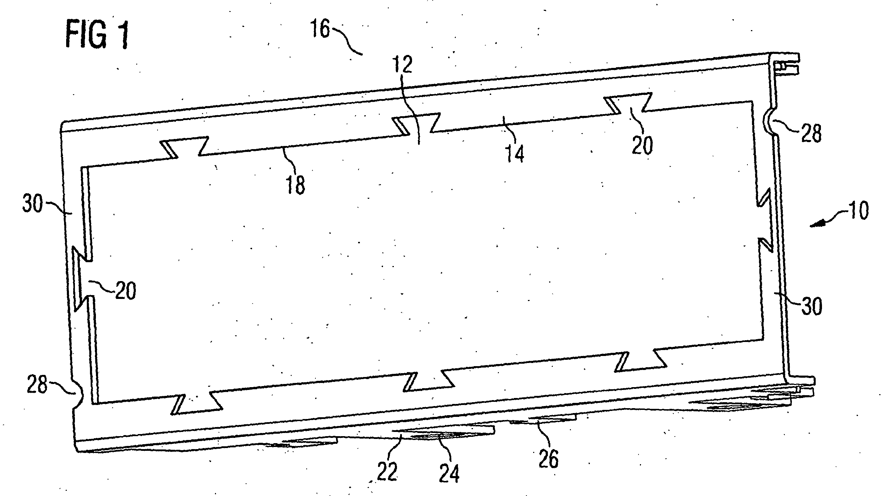

Throughout the specification, like reference numerals refer to equivalent elements. Figure 1 depicts a first view of the first frame 10. The frame may be made of metal and/or other such material. As shown, first frame 10 includes walls 14 defining an internal cavity 12 and an external region 16. The internal region includes an internal border 18 surrounding cavity 12. Border 18 includes openings 20. The openings may be of any number as required by design. In this embodiment, the openings 20 are shaped as open V's with the bottom most point of the V facing cavity 12. As depicted, the first frame 10 includes eight openings. Other shapes are also applicable as required by design. A border of walls 14 proximate to the external region 16 are bent or folded over in an approximate perpendicular angle. The border walls continue in a direction away from a plane comprising cavity 12 and will herein be referred to as secondary walls 22. Secondary walls 22 include a variety of shapes, continuous or discontinuous, with aperture 24 or without 26, and other design features as may be required by application. Utility of the secondary walls is to affix to other elements (not shown) so as to secure the frame (and whatever may be attached to the frame) to the other elements. The first frame may further include openings 28 along side walls 30, and in a direction away from cavity 12. The openings 28 facilitate handling of the frame.

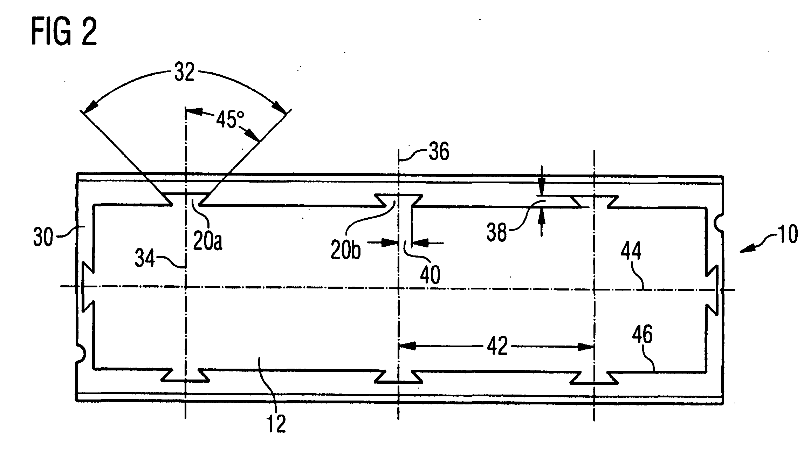

Figure 2 depicts the frame of figure 1 with measurement values assigned to certain features. The measurement values are by way example only, approximate, and do not restrict the invention to only these values. Other values are available as would be imagined by one skilled in the art. The open V openings 20 are depicted as defining an angle of ninety degrees 32. A center line 34 of openings 20 is located approximately 12 mm from a nearest side wall 30. Openings 20b not proximate to a side wall have a distance 42 of 25 mm between their center lines 36 and other openings 20a closer to side walls 30. The openings 20 define a depth 38 of 1.5 mm into walls 14, as well as an opening length 40 of 0.5 mm. Cavity 12 has a center line 44 which is 10.25 mm from a perpendicular lateral internal wall surface 46.

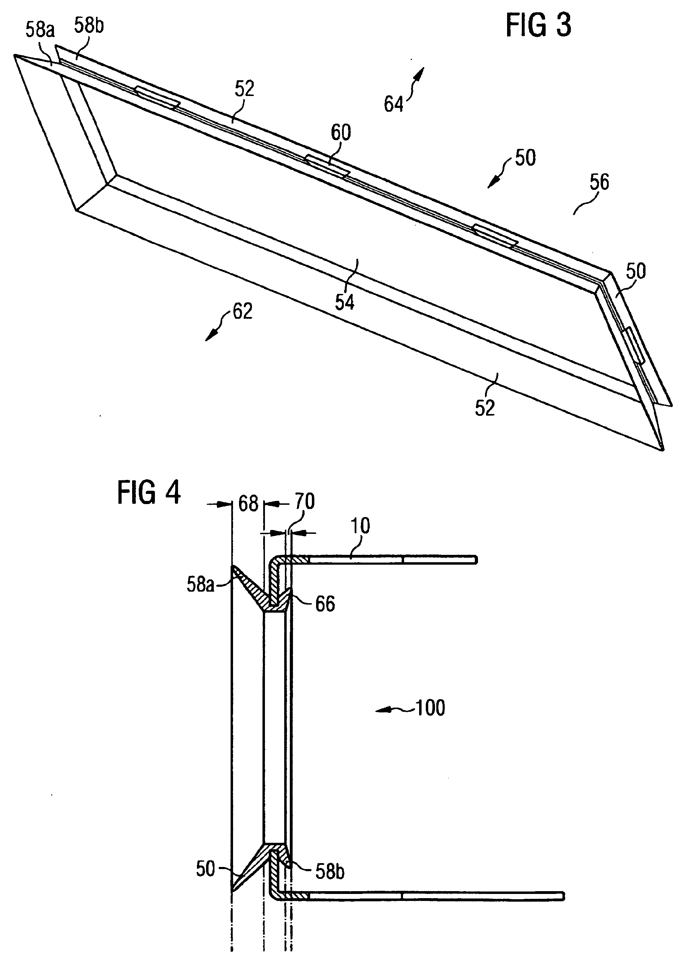

Figure 3 depicts a sealing lip 50 without a frame. The sealing lip is associated with first frame 10. The sealing lip may comprise thermoplastic elsatomer. As is known in the art, thermoplastics are materials that soften or melt when heated and harden when cooled. The term elastomer, a contraction of the words elastic and polymer, is defined as a substance that can be stretched at room temperature to at least twice its original length and, after having been stretched and the stress removed, returns with force to approximately its original length in a short time. Thermoplastic polymers consist of long polymer molecules that are not linked to each other. i.e., have no cross-links. They are often supplied as granules and heated to permit fabrication by methods such as molding or extrusion. Returning to figure 3, the sealing lip 50 comprises walls 52 defining an internal cavity 54 and an external region 56. The sealing lip is a single piece which may be made from injection molding and/or spraying, techniques well known in the art. The walls comprise a dove tail formation, extending outward from the internal cavity 54 towards external region 56 in their respective directions and on either side of walls 14. The dove tails form a V shape 58. Along the V shape 58 are spacers 60 which corresponds in size and number to openings 20. The spacers 60 facilitate gripping by the thermoplastic elastomer of sealing lip 50 to frame 10 during cooling of the elastomer. Cavity 54 corresponds to cavity 12 of the first frame 10. Likewise, walls 52 correspond to frame walls 14. When formed, sealing lip 50 is molded and/or sprayed about first frame 10. The V shape 58 includes two arms 58a and 58b. As depicted, a forward direction 62 is in a direction towards the bottom of the figure. Arm 58a, facing forward, is longer than arm 58b facing rearwards 64.

A cross section of frame 10 and sealing lip 50 is depicted in figure 4. The shaded areas 66 indicate portions which receive the injected molded or sprayed thermoplastic elastomer. The thickness 68 of arm 58a may be 0,5 - 3,0 mm and the thickness 70 of arm 58b may be 0,5 - 3,0 mm.

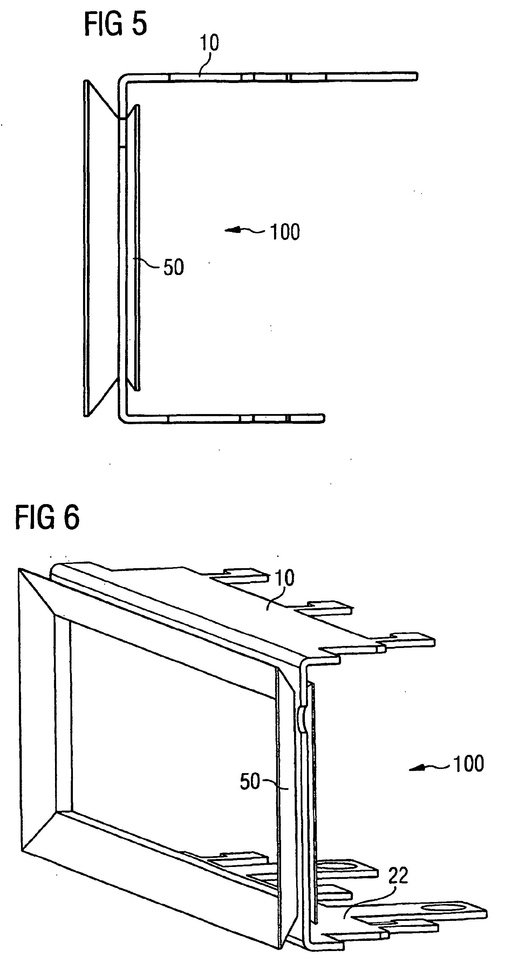

A side view of the frame 10 sealing lip 50 combination is depicted in figure 5, wherein it may be seen that frame 10 encases sealing lip 50. A component may be mounted with the sealing lip and attached to another element via frame 10.

Figure 6 depicts an elongated view of the frame sealing lip combination of figure 5. Herein, the secondary walls 22 are more visible.

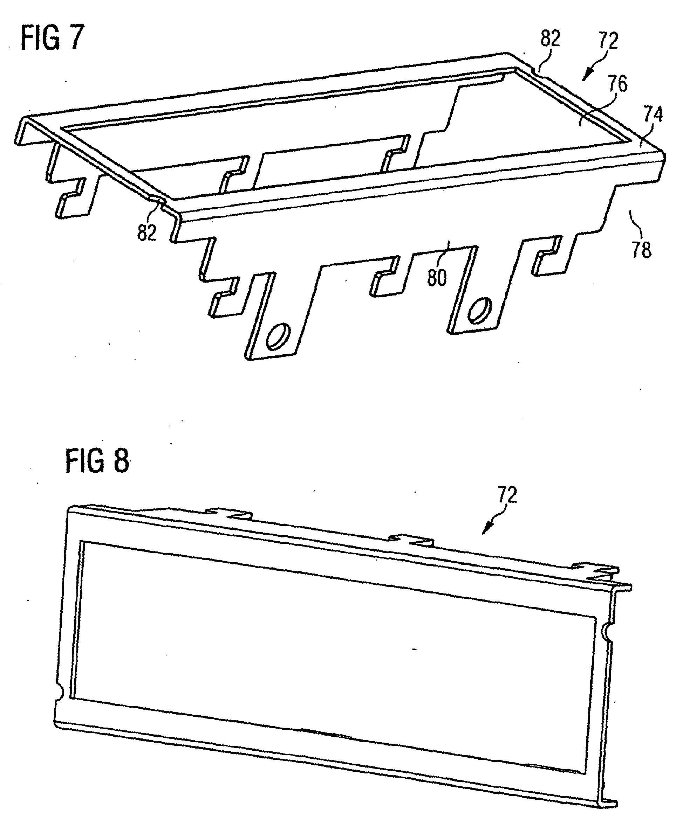

Figure 7 depicts a perspective view of a second frame 72. Second frame 72, as first frame 10, includes walls 74 defining an internal cavity 76 and an external region 78. Furthermore, secondary walls 80 are also defined by walls 74, bent at substantially 90 degrees to a plane include cavity 76. Length of walls 74 between an internal border defining cavity 76 and border indicating the above bending, is 4.15 mm. The length of the second frame 72 is 79 mm plus or minus 0.15 mm. The aforementioned measurement values are descriptive only, with other values considered within the scope of the invention, the other values known to one skilled in the art. Side openings 82 are also depicted facing away from cavity 76.

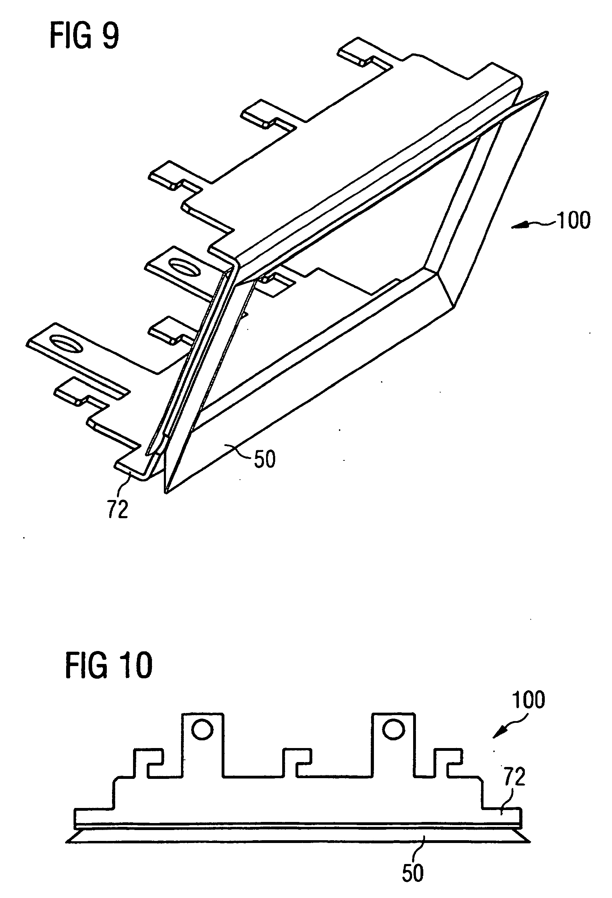

Figure 8 shows another perspective view of the second frame 72 of figure 7. Figure 9 depicts a perspective view of a combination of sealing lip 50 as may be applied to second frame 72. The features of sealing lip 50 remain the same as detailed above. Lastly, figure 10 depicts a cross section of the combination of sealing lip 50 and second frame 72.

### List of Elements

first frame 10
walls 14
internal cavity 12
external region 16
internal border 18
openings 20
openings 20a
openings 20b
secondary walls 22
aperture 24
without aperture 26
(side wall) openings 28
side wall 30,
open V angle 32
center line 34
center lines 36
depth 38
opening length 40
center line 44
internal wall surface 46
sealing lip 50
walls 52
internal cavity 54
external region 56
V shape 58
arm 58a, arm 58b
spacers 60
forward direction 62
rearwards 64.
shaded areas 66
thickness 68 of arm 58a
thickness 70 of arm 58b
second frame 72
walls 74
internal cavity 76
external region 78
secondary walls 80

## Claims

1. A component carrier (100) comprising a frame (10) and a double sided sealing lip (50), the sealing lip (50) providing mechanical force tolerance and compensation for the component encased in the frame (10) and sealing lip (50), **characterized in that**:
- the sealing lip (50) is dovetailed and comprises a thermoplastic elastomer and two arms (58a and 58b), a first (58a) of said two arms (58a and 58b) being longer than a second (58b) of said two arms, and
- the frame (10) comprises recesses for the elastomer to adhere to.

2. The component carrier (100) according to claim 1, wherein the sealing lip (50) comprises a single piece.

3. The component carrier (100) according to any one of the preceding claims 1 to 2, wherein the frame (10) comprises walls (14) defining an interior opening (12) and the recesses (20) are located along the interior opening (12).

4. The component carrier (100) according to any one of the preceding claims 1 to 3, wherein the recesses (20) are open V shaped.

5. The component carrier (100) according to any one of the preceding claims 1 to 5, wherein the sealing lip (50) is dovetailed comprising two extending arms (58a, 58b), a first(58a) of the two arms (58a, 58b) being longer than a second (58b).

6. The component carrier (100) according to claim 5, wherein the first arm (58a) faces a front (62).

7. The component carrier (100) according to any one of the preceding claims 1 to 6, wherein the component is a display.

8. A method of making a component carrier (100) according to claim 1, **characterized by**:
- injection molding and/or spraying a sealing lip (50) around a frame (10), the sealing lip (50) comprising a thermoplastic elastomer, the frame (10) comprising walls (14) defining an interior cavity (12) with recesses (20) along cavity walls (18), and the sealing lip (50) being molded in the shape of a dovetail, and
- cooling the sealing lip (50) generated by injection molding and/or spraying such that the sealing lip (50) molding adheres to the recesses (20).

9. The method according to claim 8, wherein the injection molding comprises thermoplastic elastomer.

## Patentansprüche

1. Bauteilträger (100), der einen Rahmen (10) und eine doppelseitige Dichtlippe (50) aufweist, wobei die Dichtlippe (50) dafür sorgt, dass das im Rahmen (10) und der Dichtlippe (50) eingeschlossene Bauteil mechanischer Krafteinwirkung standhält und die darauf ausgeübte mechanische Kraft ausgeglichen wird, **dadurch gekennzeichnet, dass**
- die Dichtlippe (50) schwalbenschwanzförmig ist und ein thermoplastisches Elastomer und zwei Arme (58a und 58b) aufweist, wobei ein erster (58a) der beiden Arme (58a und 58b) länger als ein zweiter (58b) der beiden Arme ist, und
- der Rahmen (10) Ausnehmungen aufweist, damit das Elastomer daran anhaften kann.

2. Bauteilträger (100) nach Anspruch 1, wobei die Dichtlippe (50) einstückig ist.

3. Bauteilträger (100) nach Anspruch 1 oder 2, wobei der Rahmen (10) eine innere Öffnung (12) definierende Wände (14) aufweist und die Ausnehmungen (20) entlang der inneren Öffnung (12) angeordnet sind.

4. Bauteilträger (100) nach einem der vorhergehenden Ansprüche 1 bis 3, wobei die Ausnehmungen (20) die Form eines offenen V haben.

5. Bauteilträger (100) nach einem der vorhergehenden Ansprüche 1 bis 4, wobei die Dichtlippe (50) schwalbenschwanzförmig ist und zwei ausgestreckte Arme (58a, 58b) aufweist, wobei ein erster (58a) der beiden Arme (58a und 58b) länger als ein zweiter (58b) ist.

6. Bauteilträger (100) nach Anspruch 5, wobei der erste Arm (58a) nach vorne (62) weist.

7. Bauteilträger (100) nach einem der vorhergehenden Ansprüche 1 bis 6, wobei das Bauteil eine Anzeige ist.

8. Verfahren zur Herstellung eines Bauteilträgers (100) nach Anspruch 1, **gekennzeichnet durch**
- Spritzgießen und/oder Sprühen einer Dichtlippe (50) um einen Rahmen (10), wobei die Dichtlippe (50) ein thermoplastisches Elastomer aufweist, der Rahmen (10) eine innere Höhlung (12) definierende Wände (14) mit Ausnehmungen (20) entlang den Höhlungswänden (18) aufweist und die Dichtlippe (50) schwalbenschwanzartig geformt ist, und
- Abkühlen der **durch** Spritzgießen und/oder Sprühen hergestellten Dichtlippe (50), so dass das Dichtlippenformteil (50) an den Ausnehmungen (20) anhaftet.

9. Verfahren nach Anspruch 8, wobei das Spritzgussteil thermoplastisches Elastomer umfasst.

## Revendications

1. Support de composant (100) comprenant un cadre (10) et une lèvre d'étanchéité à double face (50), la lèvre d'étanchéité (50) fournissant une tolérance aux forces mécaniques et une compensation pour le composant encastré dans le cadre (10) et la lèvre d'étanchéité (50), **caractérisé en ce que**
- la lèvre d'étanchéité (50) a une forme en queue d'aronde et comprend un élastomère thermoplastique et deux bras (58a et 58b), un premier (58a) desdits deux bras (58a et 58b) étant plus long qu'un second (58b) desdits deux bras et
- le cadre (10) comprend des évidements dans lesquels l'élastomère pourra adhérer.

2. Support de composant (100) selon la revendication 1, dans lequel la lèvre d'étanchéité (50) comprend une pièce unique.

3. Support de composant (100) selon l'une quelconque des revendications précédentes 1 à 2, dans lequel le cadre (10) comprend des parois (14) définissant une ouverture intérieure (12) et les évidements (20) sont situés le long de l'ouverture intérieure (12).

4. Support de composant (100) selon l'une quelconque des revendications précédentes 1 à 3, dans lequel les évidements (20) ont une forme de V ouvert.

5. Support de composant (100) selon l'une quelconque des revendications précédentes 1 à 5, dans lequel la lèvre d'étanchéité (50) a une forme en queue d'aronde comprenant deux bras en extension (58a, 58b), un premier (58a) des deux bras (58a, 58b) étant plus long qu'un second (58b).

6. Support de composant (100) selon la revendication 5, dans lequel le premier bras (58a) fait face à un côté avant (62).

7. Support de composant (100) selon l'une quelconque des revendications précédentes 1 à 6, dans lequel le composant est un affichage.

8. Procédé de fabrication d'un support de composant (100) selon la revendication 1, **caractérisé par** :
- le moulage par injection et/ou la pulvérisation par injection d'une lèvre d'étanchéité (50) autour d'un cadre (10), la lèvre d'étanchéité (50) comprenant un élastomère thermoplastique, le cadre (10) comprenant des parois (14) définissant une cavité intérieure (12) pourvue d'évidements (20) le long des parois (18) de la cavité, et la lèvre d'étanchéité (50) étant moulée de manière à avoir une forme en queue d'aronde et
- le refroidissement de la lèvre d'étanchéité (50) générée par moulage par injection et/ou pulvérisation par injection de manière à ce que le moulage de la lèvre d'étanchéité (50) adhère dans les évidements (20).

9. Procédé selon la revendication 8, dans lequel le moulage par injection comprend un élastomère thermoplastique.
